# EUROPEAN PATENT APPLICATION

(11) **EP 3 248 948 A1**
(43) Date of publication of application: **29.11.2017**
(21) Application number: 16772229.7
(22) Date of filing: 14.03.2016
(51) Int. Cl.: C02F 1/46, E03C 1/02

(54) **ELECTROLYZED-WATER GENERATION DEVICE**

(30) Priority: 31.03.2015 JP 2015070596
(71) Applicant: Nihon Trim Co., Ltd., Osaka 531-0076 (JP)
(72) Inventor: KOIZUMI Yoshinobu, Nankoku-shi Kochi 783-0060 (JP)
(74) Representative: Manitz Finsterwald Patentanwälte PartmbB
(86) International application number: PCT/JP2016/057975
(87) International publication number: WO 2016/158346

(57) **Abstract**

An electrolytic water production device 1 comprises a device main body 2 provided with an electrolytic cell 4 for electrolyzing water and a water purification cartridge 5 for purifying water supplied to the device main body 2. The device main body 2 comprises a mounting portion 6 on which the water purification cartridge 5 and a cleaning cartridge 5A filled with a chemical for cleaning an inside of the device main body 2 are detachably and selectively, either one at a time, mounted and a detector 7 for detecting that the cleaning cartridge 5A is mounted on the mounting portion 6. Since the detector 7 can detect that the cleaning cartridge 5A is mounted on the mounting portion 6, it is easy to perform an operation such as switching an operation mode and usability of the electrolytic water production device 1 is improved.

## Description

### Technical Field

The present invention relates to an electrolytic water production device that electrolyzes water to produce electrolytic hydrogen water.

### Background Art

There has been known an electrolytic water production device capable of producing electrolytic hydrogen water (electrolytic water) with hydrogen gas dissolved therein. Electrolytic hydrogen water has been attracting attention as it is suitable for removing active oxygen.

In recent years, electrolyzed water production devices for household use are becoming widespread so that electrolytic hydrogen water can be available for drinking in everyday life. For example, Patent Literature 1 (Japanese unexamined Patent Application Publication No. 2012-016643) has disclosed an electrolytic water production device provided with a removable water purification cartridge for purifying tap water and an electrolytic cell for electrolyzing water purified by the water purification cartridge.

### Citation List

### Patent Literature

Patent Literature 1: Japanese unexamined Patent Application Publication No. 2012-016643

Generally, the water purification cartridge comprises activated carbon, hollow fiber membranes and the like. Because of its nature, a purification function thereof gradually decreases as an integrated amount (integrated cumulative water amount) of water passing through the water purification cartridge increases. Therefore, in order to obtain electrolytic water with a stable quality, an electrolytic water production device provided with a water purification cartridge is usually configured to have the water purification cartridge exchangeable for exchanging a worn water purification cartridge with a new water purification cartridge.

Further, in recent years, an electrolytic water production device has been proposed in which a cleaning cartridge filled with a chemical for cleaning an inside of a device main body can be mounted in place of the water purification cartridge. Citric acid, for example, is used in the cleaning cartridge as the chemical for cleaning the inside of the device main body. Citric acid can remove scale and the like adhering to the inside of the device main body generated while using the electrolytic water production device over a long period of time.

In cleaning when the citric acid aqueous solution is filled in an electrolytic cell, it is preferred that supply of electrolytic current to the electrolytic cell is stopped in order to prevent breakdown of a power supply circuit due to a short circuit between electrode plates. The stop of the supply of the electrolytic current can be realized, for example, by setting an operation mode of the electrolytic water production device to "cleaning mode" for cleaning the inside of the device main body. In a conventional electrolytic water production device, a user needs to remove the water purification cartridge from the device main body, mount the cleaning cartridge, and switch the operation mode from "normal mode" for producing electrolytic water to "cleaning mode" described above by operating operation buttons or the like provided in the electrolytic water production device. Further, since operation in the "cleaning mode" is different from the "normal mode", the user needs to carefully proceed with the operation while referring to an instruction manual or the like of the device.

Such switching of the operation modes and operation in the "cleaning mode", for example, are an excessive burden on users such as elder people who are not accustomed to the operation of devices, therefore, it is considered as a cause of poor usability of the electrolytic water production device.

### Summary of the invention

### Problems to be Solved by the invention

The present invention was made in view of the above, and a primary object thereof is to provide an electrolytic water production device enabling easy operation for user for cleaning the inside of the device main body.

### Means for solving the problem

In one aspect of the present invention, an electrolytic water production device comprises a device main body provided with an electrolytic cell for electrolyzing water and a water purification cartridge for purifying water supplied to the device main body, and is characterized in that the device main body comprises a mounting portion on which the water purification cartridge and a cleaning cartridge filled with a chemical for cleaning an inside of the device main body are detachably and selectively, either one at a time, mounted and a detector for detecting that the cleaning cartridge is mounted on the mounting portion.

In another aspect of the invention, it is preferred that the cleaning cartridge comprises a storage unit in which information for identifying the cleaning cartridge is stored, and the detector comprises a communicator for reading the information from the storage unit and a judging portion for judging whether the cleaning cartridge is mounted on the mounting portion based on the information read by the communicator.

In another aspect of the invention, it is preferred that an operation mode of the electrolytic water production device includes a normal mode for producing electrolytic water in the electrolytic cell, and a cleaning mode for cleaning the inside of the device main body, and the device main body further comprises a switching portion for switching the operation mode from the normal mode to the cleaning mode when the detector detects that the cleaning cartridge is mounted on the mounting portion.

In another aspect of the invention, it is preferred that the device main body further comprises a stopping portion for stopping supply of electrolytic current to the electrolytic cell when the operation mode is the cleaning mode.

In another aspect of the invention, it is preferred that the device main body further comprises a notifier for notify a user of the operation mode.

In another aspect of the invention, it is preferred that the water passing through the cleaning cartridge is supplied together with the chemical to the inside of the device main body, the device main body further comprises a flow rate sensor for detecting amount of water passing through the cleaning cartridge per unit time, and the communicator starts reading the information when the amount of water exceeds a predetermined value.

In another aspect of the invention, it is preferred that the notifier notifies the user of an operation procedure of the electrolytic water production device in the cleaning mode based on the amount of water detected by the flow rate sensor.

In another aspect of the invention, it is preferred that the communicator writes a use history of the cleaning cartridge in the storage unit.

In another aspect of the invention, it is preferred that the device main body further comprises a notifier, and when the cleaning cartridge with the storage unit in which the use history is written is mounted on the mounting portion and the communicator reads the use history from the storage unit, the notifier notifies a user to replace the cleaning cartridge with a new cleaning cartridge.

### Advantageous Effects of the invention

In the electrolytic water production device according to the first aspect of the present invention, it is possible to detect by the detector that the cleaning cartridge is mounted on the mounting portion. Upon detecting that the cleaning cartridge is mounted, the electrolytic water production device can automatically switch its own operation mode or notify the user to switch the operation mode, for example. Further, it is possible to obtain a trigger for urging the user to perform specific operations necessary for cleaning the inside of the device main body. As a result, it is made easy for the user to perform the operation for cleaning the inside of the device main body, and the usability of the electrolytic water production device is improved.

### Brief Description of the Drawings

Fig. 1 is a perspective view illustrating a schematic configuration of an electrolytic water production device according to an embodiment of the present invention.
Fig. 2 is a block diagram of the electrolytic water production device with a water purification cartridge mounted thereon.
Fig. 3 is a block diagram of the electrolytic water production device with a cleaning cartridge mounted thereon.
Fig. 4 is a flow chart of processing procedures in which a controller shown in Figs 2 and 3 switches operation modes of the electrolytic water production device.

### Description of the preferred Embodiment

An embodiment of the present invention will now be described below in conjunction with accompanying drawings.

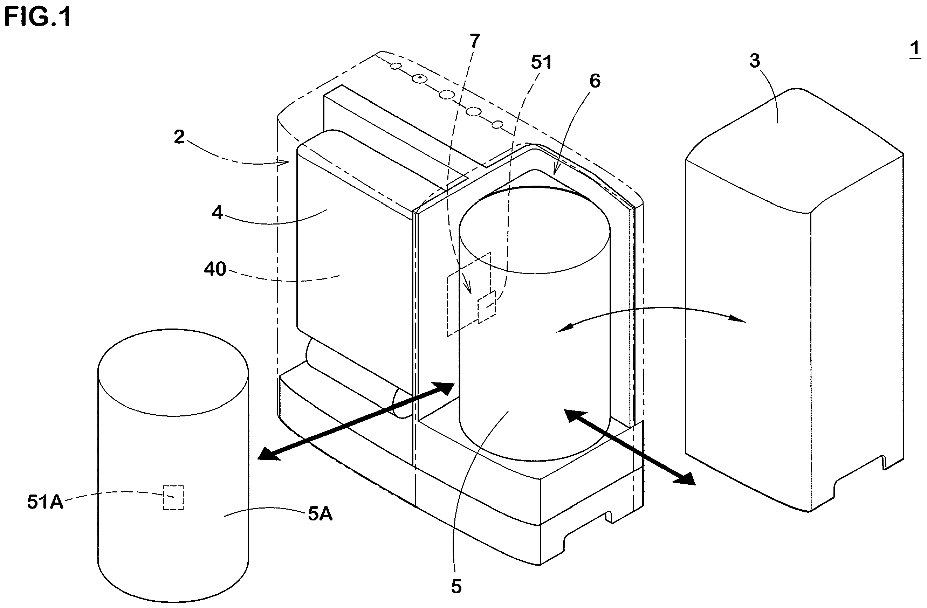

Fig. 1 illustrates a configuration of an electrolytic water production device 1 in this embodiment. The electrolytic water production device 1 in this embodiment includes a device main body 2 having an electrolytic cell 4 for electrolyzing water and a water purification cartridge 5 for purifying water to be supplied to the electrolytic cell 4. In Fig. 1, a case constituting a part of the device main body 2 is indicated by two-dot chain lines, and main components of the electrolytic water production device 1 are indicated by solid lines as if they are seen through.

The electrolytic cell 4 is fixed to the device main body 2 by screws (not shown) or the like, for example. The electrolytic cell 4 may be fixed by a method such as fitting, for example. An electrolytic chamber 40 is formed inside the electrolytic cell 4.

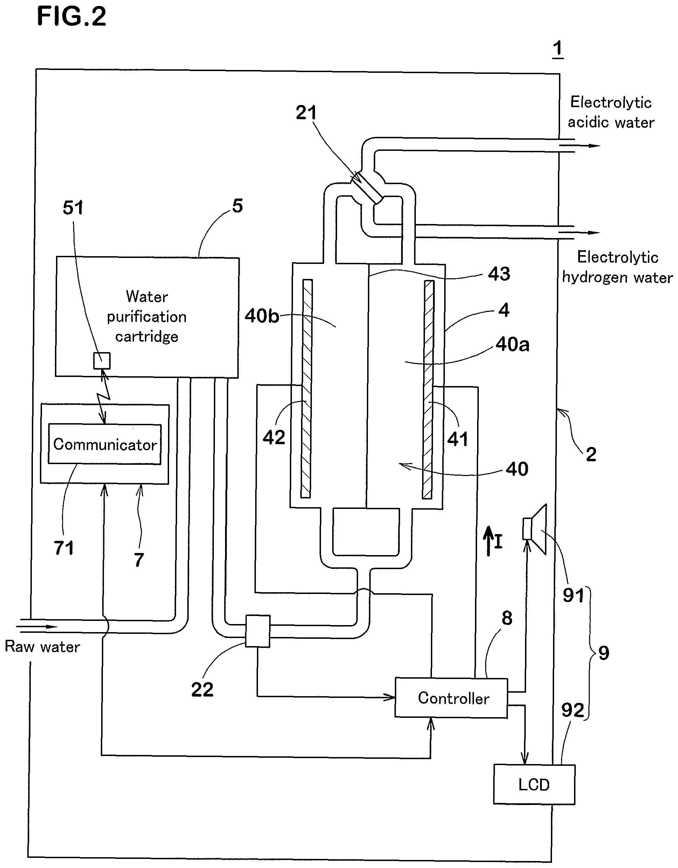

Fig. 2 shows a block diagram of the electrolytic water production device 1. A water purification cartridge 5 in this embodiment is provided upstream of the electrolytic cell 4. Raw water is supplied to the water purification cartridge 5. Generally, tap water is used as the raw water, but in addition, well water, groundwater, etc. can be used, for example. The water purification cartridge 5 purifies the raw water by filtration and supplies the obtained purified water to the electrolytic chamber 40.

An anode power feeder 41 and a cathode power feeder 42 are arranged so as to face each other inside the electrolytic chamber 40. A diaphragm 43 is disposed between the anode power feeder 41 and the cathode power feeder 42. The diaphragm 43 divides the electrolytic chamber 40 into an anode chamber (40a) on a side of the anode power feeder 41 and a cathode chamber (40b) on a side of the cathode power feeder 42.
water is supplied to both the anode chamber (40a) and the cathode chamber (40b) of the electrolytic chamber 40, and DC voltage is applied to the anode power feeder 41 and the cathode power feeder 42 so that an electrolytic current (I) is applied to the anode power feeder 41 and the cathode power feeder 42, therefore, water is electrolyzed in the electrolytic chamber 40.

Ions generated by electrolysis pass through the diaphragm 43. The anode power feeder 41 and the cathode power feeder 42 are electrically connected via the diaphragm 43. By electrolyzing water in the electrolytic chamber 40, electrolytic reduced water is obtained in the cathode chamber (40b), and electrolytic acidic water is obtained in the anode chamber (40a).

In the cathode chamber (40b), hydrogen gas is generated by electrolysis and dissolves in the water in the cathode chamber (40b). Therefore, the electrolytic reduced water obtained in the cathode chamber (40b) is also referred to as "electrolytic hydrogen water" and is considered to be effective for removing active oxygen. Note that the electrolytic reduced water may be also referred to as "reduced water", "reduction water", "alkali reduced water", "reduced hydrogen water", "hydrogen water", "alkaline ionized water", etc.

The electrolytic hydrogen water obtained in the cathode chamber (40b) and the electrolytic acidic water obtained in the anode chamber (40a) are supplied to a faucet portion via a flow path switching valve 21 and then are discharged. The flow path switching valve 21 is configured so that a connection destination can be switched between a flow path of the electrolytic hydrogen water obtained in the cathode chamber (40b) and a flow path of the electrolytic acidic water obtained in the anode chamber (40a) while separating them.

AS shown in Fig. 1, the device main body 2 is provided with a mounting portion 6 on which a water purification cartridge 5 is detachably mounted. For example, when a cover member 3 of the device main body 2 is removed, the mounting portion 6 is exposed so that the water purification cartridge 5 can be replaced.

In this embodiment, instead of the water purification cartridge 5, a cleaning cartridge 5A can be mounted on the mounting portion 6. The water purification cartridge 5 or the cleaning cartridge 5A is detachably and selectively, that is either one at a time, mounted on the mounting portion 6.

The cleaning cartridge 5A is filled with a chemical for cleaning flow paths provided inside the device main body 2. The above mentioned chemical includes citric acid and the like, for example. When a faucet is opened in a state in which the cleaning cartridge 5A is mounted on the mounting portion 6, water is supplied to the cleaning cartridge 5A and then an aqueous solution of citric acid is obtained. The citric acid aqueous solution passes through the cleaning cartridge 5A to be supplied to the electrolytic cell 4 and the flow path switching valve 21, etc., and cleans the flow paths provided inside the device main body 2.

A detector 7 for detecting mounting of the cleaning cartridge 5A to the mounting portion 6 is provided in the vicinity of the mounting portion 6.

According to this embodiment, the detector 7 can detect whether the cleaning cartridge 5A is mounted on the mounting portion 6. when mounting of the cleaning cartridge 5A is detected, it is possible that the electrolytic water production device 1 automatically switches its own operation mode or makes a notification prompting user to switch the operation mode, for example. Further, it is possible to obtain a trigger for prompting user to perform a specific operation necessary for cleaning the inside of the device main body 2. Thereby, it is easy for user to operate cleaning of the inside of the device main body 2, and usability of the electrolytic water production device 1 is improved.

In the water purification cartridge 5, an RFID (Radio Frequency Identification) tag 51 is provided as a storage unit, for example. The RFID tag 51 is a storage unit capable of reading and writing information by wireless communication.

For example, unique ID information for identifying the water purification cartridge 5 is stored in the RFID tag 51. The information for identifying the water purification cartridge 5 can be used as information for confirming that the water purification cartridge 5 is a genuine product for the electrolytic water production device 1. when the water purification cartridge 5 other than the genuine product is mounted on the mounting portion 6 of the electrolytic water production device 1, the electrolytic water production device 1 cannot acquire the above information, therefore, it is possible to know that the genuine water purification cartridge 5 is not mounted. In this case, the electrolytic water production device 1 can stop producing the electrolytic water and can prompt user to exchange the water purification cartridge with the genuine water purification cartridge 5 by using a notifier 9.

On the other hand, the cleaning cartridge 5A is provided with an RFID tag 51A as a storage unit, for example. In the RFID tag 51A, information for identifying the cleaning cartridge 5A is stored, for example. When the cleaning cartridge 5A is mounted on the mounting portion 6 of the electrolytic water production device 1, the electrolytic water production device 1 can determine that the cleaning cartridge 5A has been mounted by reading the information stored in the RFID tag 51A.

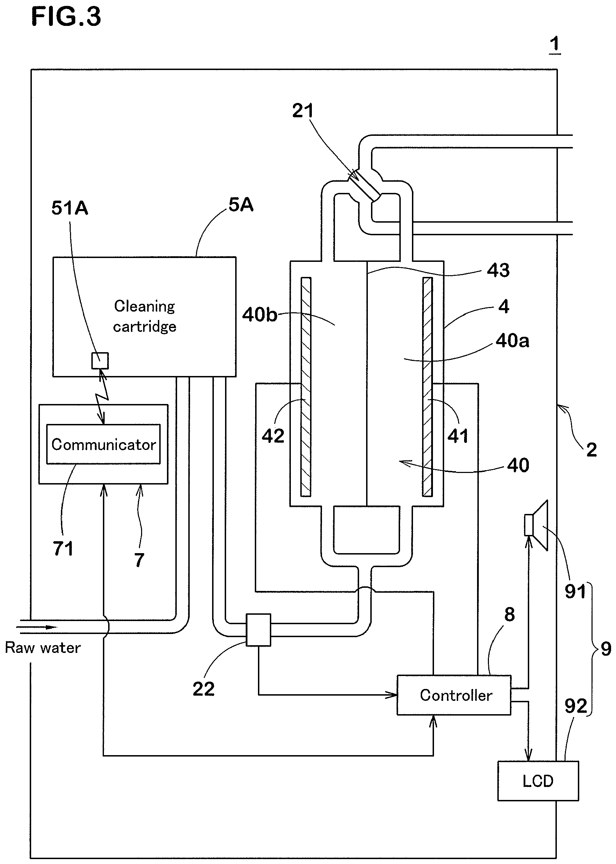

Fig. 3 is a block diagram of the electrolytic water production device 1 with the cleaning cartridge 5A mounted thereon. A communicator 71 is used as the detector 7 in this embodiment. The communicator 71 is a reader/writer device having a function of performing wireless communication with the RFID tag 51 or the RFID tag 51A to read and write information. The communicator 71 may read and write information by wire communication between the storage unit of the water purification cartridge 5 and between the storage unit of the cleaning cartridge 5A.

As shown in Figs 2 and 3, the device main body 2 further includes a controller 8, the notifier 9, and a flow rate sensor 22.

The controller 8 includes, for example, a CPU (Central Processing unit) for executing various kinds of arithmetic processing, information processing and the like, a program for controlling an operation of the CPU, a memory for storing various kinds of information, and the like.

The controller 8 controls each part of the electrolytic water production device 1. For example, the controller 8 controls the electrolytic current (I) to be supplied to the anode power feeder 41 and the cathode power feeder 42 by referring to the information stored in the memory and according to a signal inputted from the flow rate sensor 22. The control of the electrolytic current (I) is realized, for example, by controlling voltage applied between the anode power feeder 41 and the cathode power feeder 42 by the controller 8.

Further, the controller 8 controls switching of polarity of the DC voltage applied to the anode power feeder 41 and the cathode power feeder 42 and operation of the flow path switching valve 21. The switching of the polarity and switching of the flow paths are controlled in synchronization with each other by the controller 8.

Information read by the communicator 71 is transferred to the controller 8. Then, the controller 8 functions, for example, as a judging portion for judging whether the cleaning cartridge 5A is mounted on the mounting portion 6. The controller 8 judges whether the cleaning cartridge 5A is mounted based on the information read by the communicator 71. For example, information for identifying the cleaning cartridge 5A is stored in advance in the memory of the controller 8. The controller 8 judges whether a cartridge mounted on the mounting portion 6 is the cleaning cartridge 5A by comparing the information read by the communicator 71 (that is, the information stored in the RFID tag 51A) with the information stored in the memory. In other words, when the information read by the communicator 71 matches the information stored in the memory, it can be determined that the cleaning cartridge 5A is mounted on the mounting portion 6.

Further, the controller 8 functions as a switching portion for switching the operation mode of the electrolytic water production device 1. The operation modes switched by the controller 8 include "normal mode" for producing electrolytic water and "cleaning mode" for cleaning the inside of the device main body 2.
when the water purification cartridge 5 is mounted on the mounting portion 6, the electrolytic water production device 1 operates in the "normal mode", and when the cleaning cartridge 5A is mounted on the mounting portion 6, the electrolytic water production device 1 operates in the "cleaning mode". Therefore, when detecting the mounting of the cleaning cartridge 5A on the mounting portion 6, the detector 7 switches the operation mode of the electrolytic water production device 1 from "normal mode" to "cleaning mode".

In this embodiment, in the "cleaning mode" in which the citric acid aqueous solution is filled in the electrolytic cell 4, in order to prevent breakage of a power supply circuit due to a short circuit between the anode power feeder 41 and the cathode power feeder 42, supply of electrolytic current to the electrolytic cell 4 is stopped. Therefore, when the operation mode of the electrolytic water production device 1 is the "cleaning mode", the controller 8 functions as a stopping portion for stopping the supply of the electrolytic current to the electrolytic cell 4.

The notifier 9 notifies various kinds of information to the user. For example, the notifier 9 notifies the user of the operation mode of the electrolytic water production device 1. Thereby, usability of the electrolytic water production device 1 is improved.

The notifier 9 notifies the user of the above information by using sound, light or the like. In this embodiment, a speaker 91 for outputting sounds, an LCD (Liquid Crystal Display) 92 for displaying images such as character information, and the like are used. Only one of the speaker 91 and the LCD 92 may be used.

The speaker 91 and the LCD 92 are controlled by the controller 8. That is, the controller 8 outputs a sound signal to the speaker 91, and the speaker 91 outputs sound corresponding to the sound signal inputted from the controller 8. Likewise, the controller 8 outputs an image signal to the LCD 92, and the LCD 92 outputs an image corresponding to the image signal inputted from the controller 8. Instead of the LCD 92, an LED (Light Emitting Diode) or the like for displaying various kinds of information may be used.

The flow rate sensor 22 detects amount of water passing through the water purification cartridge 5 to be supplied to the electrolytic cell 4 per unit time. The flow rate sensor 22 in this embodiment is provided in a flow path connecting the water purification cartridge 5 and the electrolytic cell 4, that is, downstream of the water purification cartridge 5. It is sufficient for the flow rate sensor 22 to be able to detect the amount of water passing through the water purification cartridge 5, therefore, the water purification cartridge 5 may be provided upstream or inside the water purification cartridge 5.

The flow rate sensor 22 detects the amount of water and transmits the signal to the controller 8. Based on the signal transmitted from the flow rate sensor 22, the controller 8 determines the amount of water passing through the water purification cartridge 5 per unit time. The amount of water detected by the flow rate sensor 22 can be used, for example, for management of replacement timing of the water purification cartridge 5. In other words, the controller 8 can manage the replacement timing of the water purification cartridge 5 by integrating the amount of water.

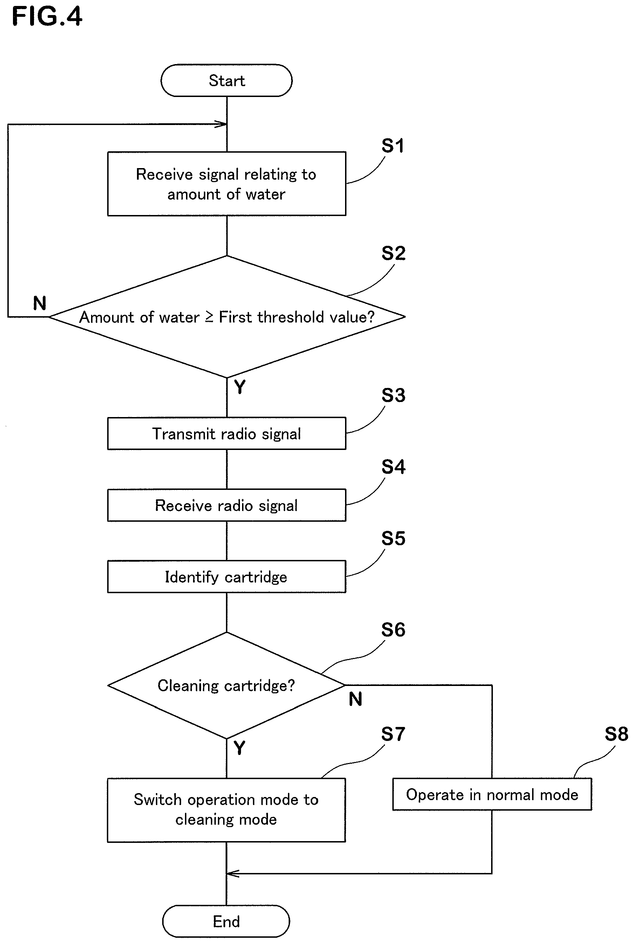

Fig. 4 is a flowchart showing processing procedures in which the controller 8 switches the operation mode of the electrolytic water production device 1 from "normal mode" to "cleaning mode".
when a faucet (not shown) connected to the electrolytic water production device 1 is opened, the flow rate sensor 22 detects the amount of water passing through the water purification cartridge 5 and transmits a corresponding water flow signal to the controller 8. upon receiving the signal relating to the amount of water (Step S1), the controller 8 compares the amount of water with a first threshold value (Step S2). The first threshold value is determined in advance as a reference value for determining starts of various operations of the electrolytic water production device 1. If the amount of water is less than the first threshold value (N in Step S2), the flow returns to Step S1 and the amount of water is continuously monitored.

On the other hand, if the amount of water is not less than the first threshold value (Y in Step S2), the controller 8 instructs the communicator 71 to transmit a radio signal for communicating with the RFID tag 51 or the RFID tag 51A (Step S3). In response to this, the RFID tag 51 or the RFID tag 51A transmits a radio signal relating to the information stored therein, and the communicator 71 receives this radio signal (Step S4) and transfers it to the controller 8. The controller 8 identifies the cartridge mounted on the mounting portion 6 by the signal transferred from the communicator 71 (Step S5).

In this embodiment, the amount of water detected by the flow rate sensor 22 is used as a trigger for the communicator 71 to transmit the radio signal at Step S3. Therefore, the user can operate the electrolytic water production device 1 without being conscious of the existence of the communicator 71, the RFID tag 51A, or the like. Therefore, the operation of the electrolytic water production device 1 becomes easy, and usability thereof is improved.
when determining that the cleaning cartridge 5A is mounted on the mounting portion 6 (Y in Step S6), the controller 8 switches the operation mode of the electrolytic water production device 1 from the "normal mode" to the "cleaning mode" (Step S7).

On the other hand, when determining that the water purification cartridge 5 is mounted on the mounting portion 6 (N in Step S6), the controller 8 continues the operation while maintaining the operation mode of the electrolytic water production device 1 in the "normal mode" (Step S8). In this "normal mode", an electrolytic current is supplied to the electrolytic cell 4, and electrolytic hydrogen water is produced by electrolysis.

In the "cleaning mode", while the water supply to the water purification cartridge 5 is continued, the controller 8 stops the supply of the electrolytic current to the electrolytic cell 4 of the electrolytic water production device 1. Thereby, it is possible to protect the power supply circuit from a short circuit between the anode and the cathode power feeders. In this embodiment, when the operation mode of the electrolytic water production device 1 is switched to the "cleaning mode", the controller 8 instructs the notifier 9 to display information indicating that the operation mode of the electrolytic water production device 1 is "cleaning mode". Thus, the user can easily confirm the operation mode of the electrolytic water production device 1, and the usability of the electrolytic water production device 1 is improved.

Further, the controller 8 in this embodiment instructs the notifier 9 to notify the user of a series of operational procedures of the electrolytic water production device 1 in the "cleaning mode". The user can easily clean the water flow paths inside the device main body 2 and further can set the operation mode back to the "normal mode" by operating the electrolytic water production device 1 according to the notification outputted from the notifier 9, therefore, the usability of the electrolytic water production device 1 is improved.

The operation procedures notified by the notifier 9 include the following procedure, for example. First, the water flow to the cleaning cartridge 5A is continued until the chemical for cleaning filled in the cleaning cartridge 5A spreads in the entire flow paths inside the device main body 2. The controller 8 integrates the amount of water detected by the flow rate sensor 22 and compares the integrated value with a predetermined second threshold value, therefore, the controller 8 can determine whether the cleaning chemical has spread to the flow paths inside the device main body 2. when it is determined that the chemical for cleaning has spread in the entire flow paths, the controller 8 instructs the notifier 9 to output a notification notifying the user to close the faucet. When the user closes the water faucet in accordance with the above notification, the chemical for cleaning stays in the flow paths inside the device main body 2, and cleans the flow paths.

The time is counted by the controller 8, for example, during the cleaning of the flow paths inside the device main body 2. when a predetermined time has elapsed, the controller 8 instructs the notifier 9 to output a notification notifying the user to open the faucet. When the user opens the faucet in accordance with the above notification, the water supply to the cleaning cartridge 5A is resumed, and the water passed through the cleaning cartridge 5A flows into the flow paths inside the device main body 2. The controller 8 integrates the amount of water detected by the flow rate sensor 22 and compares the integrated value with a predetermined third threshold value, therefore, the controller 8 can determine whether the chemical for cleaning flows out from the flow paths inside the device main body 2. when it is determined that the chemical for cleaning has flowed out from the flow paths, the controller 8 instructs the notifier 9 to output a notification notifying the user to close the faucet. When the user closes the faucet in accordance with the above notification, the "cleaning mode" is completed.
when determining that the faucet is closed, the controller 8 switches the operation mode of the electrolytic water production device 1 back to the "normal mode". The determination as to whether the faucet is closed can be made from the amount of water detected by the flow rate sensor 22.

As described above, the controller 8 controls the notifier 9 based on the amount of water detected by the flow rate sensor 22 to notify the user of the operation procedures of the electrolytic water production device 1 in the "cleaning mode". Thereby, the user can easily and appropriately operate the electrolytic water production device 1 in the "cleaning mode", and the usability of the electrolytic water production device 1 is improved.

As described above, the communicator 71 has a function of reading and writing information from/to the RFID tag 51 or the RFID tag 51A. Therefore, the communicator 71 in this embodiment writes the information on a use history to the RFID tag 51A of the cleaning cartridge 5A by using the writing function.
when the used cleaning cartridge 5A with the RFID tag 51A in which the information on the usage history is written is mounted on the mounting portion 6, the information on the usage history is read by the communicator 71 in Step S4 shown in Fig. 4, and transferred to the controller 8. when the controller 8 determines from the information transferred from the communicator 71 that the mounted cartridge is the used cleaning cartridge 5A, the controller 8 does not switch to the "cleaning mode". At this time, the notifier 9 may be used to notify the user to replace the cartridge with a new cleaning cartridge 5A. By recording the information on the use history of the cleaning cartridge 5A in the RFID tag 51A in this manner, it is possible to prevent the used cleaning cartridge 5A from being accidentally used, therefore, the usability of the electrolytic water production device 1 is improved.

According to the electrolytic water production device 1 in this embodiment having the configuration as described above, the detector 7 can detect that the cleaning cartridge 5A is mounted on the mounting portion 6. The electrolytic water production device 1 that has detected that the cleaning cartridge 5A is mounted can automatically switch its own operation mode or can notify the user to switch the operation mode. Further, it is possible to obtain a trigger for prompting the user to perform a specific operation necessary for cleaning the inside of the device main body 2. As a result, the operation performed by the user for cleaning the inside of the device main body 2 is made easy, and the usability of the electrolytic water production device 1 is improved.
while detailed description has been made of the electrolytic water production device 1 as an embodiment of the present invention, the present invention can be embodied in various forms without being limited to the illustrated embodiment. Specifically, the electrolytic water production device 1 may be at least configured to include: the device main body 2 provided with the electrolytic cell 4 for electrolyzing water; and the water purification cartridge 5 for purifying water supplied to the device main body 2, wherein the device main body 2 includes the mounting portion 6 on which the water purification cartridge 5 or the cleaning cartridge 5A filled with a chemical for cleaning the inside of the device main body 2 is detachably and selectively, that is either one at a time, mounted, and the detector 7 for detecting that the cleaning cartridge 5A is mounted on the mounting portion 6.

### Reference signs List

- 1: electrolytic water production device
- 2: device main body
- 4: electrolytic cell
- 5: water purification cartridge
- 6: RFID tag
- 7: detector
- 8: controller
- 9: notifier
- 71: communicator
- 91: speaker (notifier)
- 92: LCD (notifier)

## Claims

1. An electrolytic water production device comprising a device main body provided with an electrolytic cell for electrolyzing water and a water purification cartridge for purifying water supplied to the device main body, **characterized in that**
the device main body comprises a mounting portion on which the water purification cartridge and a cleaning cartridge filled with a chemical for cleaning an inside of the device main body are detachably and selectively, either one at a time, mounted and a detector for detecting that the cleaning cartridge is mounted on the mounting portion.

2. The electrolytic water production device according to claim 1, wherein
the cleaning cartridge comprises a storage unit in which information for identifying the cleaning cartridge is stored, and
the detector comprises a communicator for reading the information from the storage unit and a judging portion for judging whether the cleaning cartridge is mounted on the mounting portion based on the information read by the communicator.

3. The electrolytic water production device according to claim 2, wherein
an operation mode of the electrolytic water production device includes a normal mode for producing electrolytic water in the electrolytic cell, and a cleaning mode for cleaning the inside of the device main body, and
the device main body further comprises a switching portion for switching the operation mode from the normal mode to the cleaning mode when the detector detects that the cleaning cartridge is mounted on the mounting portion.

4. The electrolytic water production device according to claim 3, wherein
the device main body further comprises a stopping portion for stopping supply of electrolytic current to the electrolytic cell when the operation mode is the cleaning mode.

5. The electrolytic water production device according to claim 3 or 4, wherein
the device main body further comprises a notifier for notify a user of the operation mode.

6. The electrolytic water production device according to claim 5, wherein
the water passing through the cleaning cartridge is supplied together with the chemical to the inside of the device main body,
the device main body further comprises a flow rate sensor for detecting amount of water passing through the cleaning cartridge per unit time, and
the communicator starts reading the information when the amount of water exceeds a predetermined value.

7. The electrolytic water production device according to claim 6, wherein
the notifier notifies the user of an operation procedure of the electrolytic water production device in the cleaning mode based on the amount of water detected by the flow rate sensor.

8. The electrolytic water production device according to any one of claims 2 to 7, wherein
the communicator writes a use history of the cleaning cartridge in the storage unit.

9. The electrolytic water production device according to claim 8, wherein
the device main body further comprises a notifier, and
when the cleaning cartridge with the storage unit in which the use history is written is mounted on the mounting portion and the communicator reads the use history from the storage unit, the notifier notifies a user to replace the cleaning cartridge with a new cleaning cartridge.
